# EUROPEAN PATENT APPLICATION

(11) **EP 4 831 925 A1**
(43) Date of publication of application: **28.10.2026**
(21) Application number: 24906207.6
(22) Date of filing: 11.12.2024
(51) Int. Cl.: G06T 11/60

(54) **EMOJI GENERATION METHOD AND APPARATUS, WORK POSTING METHOD AND APPARATUS, AND DEVICE AND STORAGE MEDIUM**

(30) Priority: 19.12.2023 CN 202311754645
(71) Applicant: Beijing Zitiao Network Technology Co., Ltd., Beijing 100190 (CN)
(72) Inventor: WAN, Shiqi, Beijing 100028 (CN); SHU, Siqi, Beijing 100028 (CN)
(74) Representative: Marks & Clerk LLP
(86) International application number: PCT/CN2024/138610
(87) International publication number: WO 2025/130724

(57) **Abstract**

Embodiments of the disclosure relate to methods, apparatuses, a device, and a storage medium for generating an emoji and posting a work. The method for generating an emoji provided herein includes: receiving an emoji generation request associated with a target image; and providing a first set of emoji resources generated based on the target image, where a set of emoji resources is associated with a first style, and the first set of emoji resources includes a plurality of items of emoji resources corresponding to a plurality of preset themes.

## Description

The present application claims priority to Chinese Patent Application No. 202311754645.X, filed on December 19, 2023, and entitled "METHODS, APPARATUSES, DEVICE, AND STORAGE MEDIUM FOR GENERATING EMOJI AND POSTING WORK", which is incorporated herein by reference in its entirety.

### TECHNICAL FIELD

Example embodiments of the present disclosure generally relate to the field of computers, and in particular, to methods, apparatuses, a device, and a computer-readable storage medium for generating an emoji and posting a work.

### BACKGROUND

With the development of computer technologies, the Internet has become an important platform for people to exchange information. In the process of information exchange through the Internet, various types of emojis have become important media for social emoji and information exchange. High-quality emojis can better help users express desired information conveniently.

### SUMMARY

In a first aspect of the present disclosure, a method for generating an emoji is provided. The method includes: receiving an emoji generation request associated with a target image; and providing a first set of emoji resources generated based on the target image, where a set of emoji resources is associated with a first style, and the first set of emoji resources includes a plurality of items of emoji resources corresponding to a plurality of preset themes.

In a second aspect of the present disclosure, a method for posting a work is provided. The method includes: presenting a viewing interface of a first work, the first work including a picture work or a video work; presenting a set of emoji resources generated based on the first work based on a selection of a third entry in the viewing interface; and posting a second work corresponding to at least one item of emoji resource in the set of emoji resources based on a selection of the at least one item of emoji resource.

In a third aspect of the present disclosure, an apparatus for generating an emoji is provided. The apparatus includes: a request receiving module configured to receive an emoji generation request associated with a target image; and an emoji providing module configured to provide a first set of emoji resources generated based on the target image, where a set of emoji resources is associated with a first style, and the first set of emoji resources includes a plurality of items of emoji resources corresponding to a plurality of preset themes.

In a fourth aspect of the present disclosure, an apparatus for posting a work is provided. The apparatus includes: an interface presenting module configured to present a viewing interface of a first work, the first work including a picture work or a video work; an emoji presenting module configured to present a set of emoji resources generated based on the first work based on a selection of a third entry in the viewing interface; and a work posting module configured to post a second work corresponding to at least one item of emoji resource in the set of emoji resources based on a selection of the at least one item of emoji resource.

In a fifth aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect or the second aspect.

In a sixth aspect of the present disclosure, a computer-readable storage medium is provided. The computer-readable storage medium has a computer program stored thereon, and the computer program is executable by a processor to perform the method of the first aspect or the second aspect.

It should be understood that the content described in this summary section is not intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The foregoing and other features, advantages, and aspects of the embodiments of the present disclosure become more apparent with reference to the following detailed description and in conjunction with the drawings. In the drawings, the same or similar reference numerals denote the same or similar elements.
FIG. 1 is a schematic diagram of an example environment in which the embodiments according to the present disclosure may be implemented;
FIGS. 2A to 2D show example interfaces according to some embodiments of the present disclosure;
FIGS. 3A to 3B show example interfaces according to still some embodiments of the present disclosure;
FIG. 4A is a flowchart of an example process for generating an emoji according to some embodiments of the present disclosure;
FIG. 4B is a flowchart of an example process for posting a work according to some embodiments of the present disclosure;
FIG. 5A is a schematic structural block diagram of an example apparatus for generating an emoji according to some embodiments of the present disclosure;
FIG. 5B is a schematic structural block diagram of an example apparatus for posting a work according to some embodiments of the present disclosure; and
FIG. 6 is a block diagram of an electronic device capable of implementing a plurality of embodiments of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only used for illustrative purposes, and are not used to limit the scope of protection of the present disclosure.

It should be noted that the titles of any sections/subsections provided herein are not restrictive. Various embodiments are described throughout this specification, and any type of embodiments may be included under any section/subsection. In addition, the embodiments described in any section/subsection may be combined with any other embodiments described in the same section/subsection and/or different sections/subsections in any manner.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition, and/or data usage, and the like. These aspects all comply with the corresponding laws, regulations, and related provisions. In the embodiments of the present disclosure, all data collection, acquisition, processing, machining, forwarding, usage, and the like are performed on the premise that the user is aware of and confirms. Correspondingly, when implementing the embodiments of the present disclosure, the user should be informed of the type, usage scope, usage scenarios, etc., of possible data or information involved in an appropriate manner according to relevant laws and regulations, and the authorization of the user should be obtained. A specific manner of informing and/or authorizing may be changed according to the actual situation and application scenarios, and the scope of the present disclosure is not limited in this regard.

The solutions in this specification and the embodiments, if involving personal information processing, will be processed on the premise that a legal basis is provided (for example, the consent of the personal information subject is obtained, or it is necessary to perform a contract, etc.), and will only be processed within a specified or agreed scope. If the user refuses to process personal information other than necessary information required for a basic function, it will not affect the user's use of the basic function.

In the process of information interaction through the Internet, people expect to use high-quality emojis to express desired information conveniently. Traditional emoji resources rely on the production of professional teams, which require a lot of time costs, and it is difficult to provide users with personalized emojis.

An embodiment of the present disclosure provides a solution for generating an emoji. According to the solution, an emoji generation request associated with a target image may be received. Further, a first set of emoji resources generated based on the target image may be provided, where a set of emoji resources is associated with a first style, and the first set of emoji resources includes a plurality of items of emoji resources corresponding to a plurality of preset themes.

In this way, the embodiments of the present disclosure may efficiently generate emoji resources of different themes associated with a specific style, thereby improving the efficiency of generating emoji resources.

Various example implementations of the solution are described in detail below with further reference to the drawings.

### Example Environment

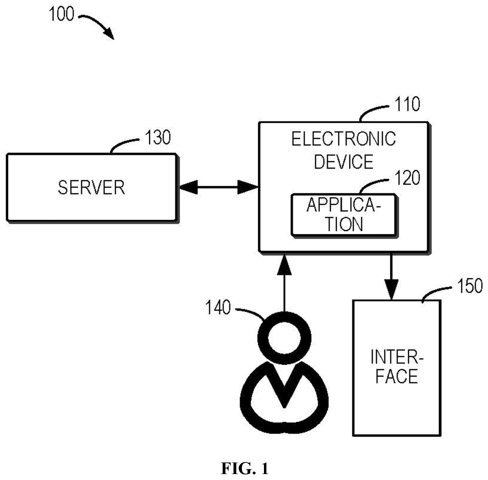

FIG. 1 is a schematic diagram of an example environment 100 in which the embodiments of the present disclosure may be implemented. As shown in FIG. 1, the example environment 100 may include an electronic device 110.

In the example environment 100, the electronic device 110 may run an application 120 supporting interface interaction. The application 120 may be any appropriate type of application for interface interaction, and examples of the application 120 include but are not limited to a video application, a social application, or another appropriate application. A user 140 may interact with the application 120 via the electronic device 110 and/or an attached device of the electronic device 110.

In the environment 100 shown in FIG. 1, if the application 120 is in an active state, the electronic device 110 may present an interface 150 for supporting the interface interaction through the application 120.

In some embodiments, the electronic device 110 communicates with a server 130 to implement the provision of the service of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination thereof, including accessories and peripherals of these devices or any combination thereof. In some embodiments, the electronic device 110 may also support any type of user-specific interface (such as "wearable" circuitry, etc.).

The server 130 may be an independent physical server, a server cluster or distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and the like. The server 130 may provide a background service for the application 120 supporting a virtual scene in the electronic device 110.

A communication connection may be established between the server 130 and the electronic device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection between the server 130 and the electronic device 110.

It should be understood that the structures and functions of various elements in the environment 100 are described for exemplary purposes only, without suggesting any limitation to the scope of the present disclosure.

Some example embodiments of the present disclosure are described below with continued reference to the drawings.

### Example Interaction

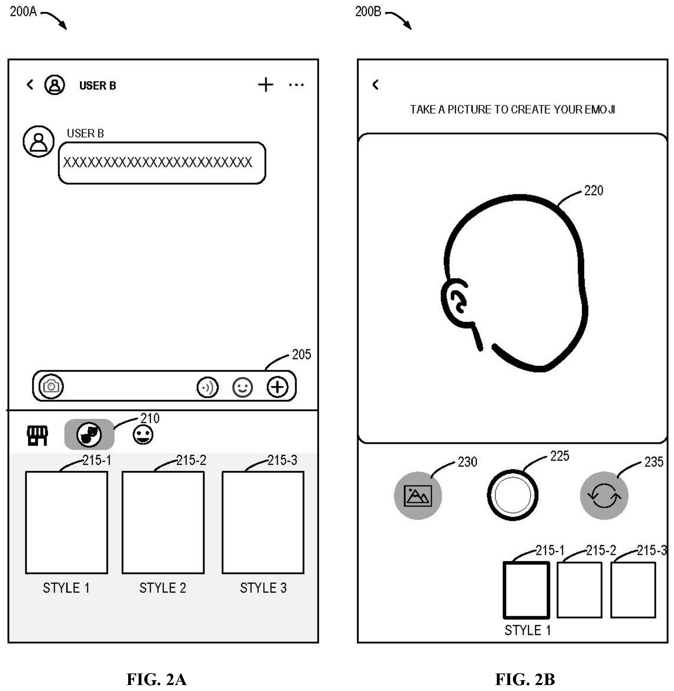

An example process of generating an emoji (also called emoji) according to the embodiments of the present disclosure is described below with reference to FIGS. 2A to 2D. FIGS. 2A to 2D show example interfaces 200A to 200D according to some embodiments of the present disclosure. The interfaces 200A to 200D may be provided by the electronic device 110 shown in FIG. 1.

As shown in FIG. 2A, the interface 200A may be a chat interface, and for example, the chat interface may provide an input bar 205. For example, the user may use the input bar 205 to input text content, voice content, emoji content, image content, etc., into the chat.

As an example, the electronic device 110 may also present a panel (also referred to as an input control) at the bottom of the interface 200A, and the panel may provide an entry 210 for generating an emoji.

After receiving a selection of the entry 210, the electronic device 110 may present a set of candidate styles in the panel, for example, a candidate style 215-1, a candidate style 215-2, and a candidate style 215-3 (individually or collectively referred to as candidate styles 215). In some embodiments, the set of candidate styles 215 may include one or more preset styles.

In some embodiments, the candidate styles 215 may correspond to different styles of emojis, for example, different image styles (for example, a cartoon style, a personification style, etc.). As an example, the electronic device 110 may also present a corresponding preview image in association with each candidate style 215 to visually represent a corresponding style.

In some scenarios, the candidate styles 215 may also correspond to different emoji themes. For example, a style 1 may correspond to animation A, and a style 2 may correspond to film and television work B.

As an example, after receiving a selection of the candidate style 215-1 (also referred to as a first style 215-1), the electronic device 110 may present an interface 200B shown in FIG. 2B. The interface 200B may also be referred to as an image acquisition interface or a shooting interface.

As shown in FIG. 2B, the electronic device 110 may provide a capturing frame (also called viewfinder) in the interface 200B for capturing an image by using a camera of the electronic device 110. As an example, the electronic device 110 may capture a target image 220 for emoji generation by the camera, for example.

In some embodiments, the electronic device 110 may further provide indication information in the capturing frame, for example, to guide the user to shoot the target image 220 corresponding to a preset part. For example, the electronic device 110 may display a framing area represented by dotted lines in the capturing frame, and the framing area may have a shape corresponding to the preset part (for example, a face, a hand, etc.), for example, to guide the user to shoot an image (for example, a facial image, a hand image, etc.) corresponding to the preset part.

In some embodiments, such indication information may be determined based on the selected first style 215-1. As an example, different styles may correspond to different framing guide information, for example, to guide the user to shoot different preset parts.

In some embodiments, if the content framed by the user currently does not match the indication information, the electronic device 110 may, for example, further provide text information to guide the user to shoot the target image 220 corresponding to the preset part.

Further, after receiving a trigger for a shooting control 225, the electronic device 110 may shoot a corresponding target image 220 for the generation of emoji resources. As an example, the electronic device 110 may also perform shooting by using different cameras of the electronic device 110 based on a trigger for a switching control 235.

As shown in FIG. 2B, the electronic device 110 may further provide an uploading control 230 in the interface 200B, for example. The electronic device 110 may acquire the target image uploaded by the user based on the user's selection of the uploading control 230. For example, with the knowledge and authorization of the user, the electronic device 110 may receive the user's selection of a local picture as the target image.

In addition, as shown in FIG. 2B, the electronic device 110 may further present the set of candidate styles 215 in the interface 200B, where the first style 215-1 may be in a selected state, for example. For example, the user may also perform switching by clicking on other candidate styles 215, or the user may switch to different styles by performing a sliding operation (for example, sliding left) in a preset direction in the interface 200B.

Although in the above example, the presentation of the interface 200B is triggered through the style selection in FIG. 2A, it should be understood that the electronic device 110 may also present the interface 200B shown in FIG. 2B based on other appropriate operations.

For example, the electronic device 110 may present the interface 200B (also referred to as a shooting interface or a work creation interface) based on a shooting request or a work creation request of the current user. For example, the electronic device 110 may initially present the set of candidate styles 215 in the interface 200B, or may present the set of candidate styles 215 based on a preset operation of the user.

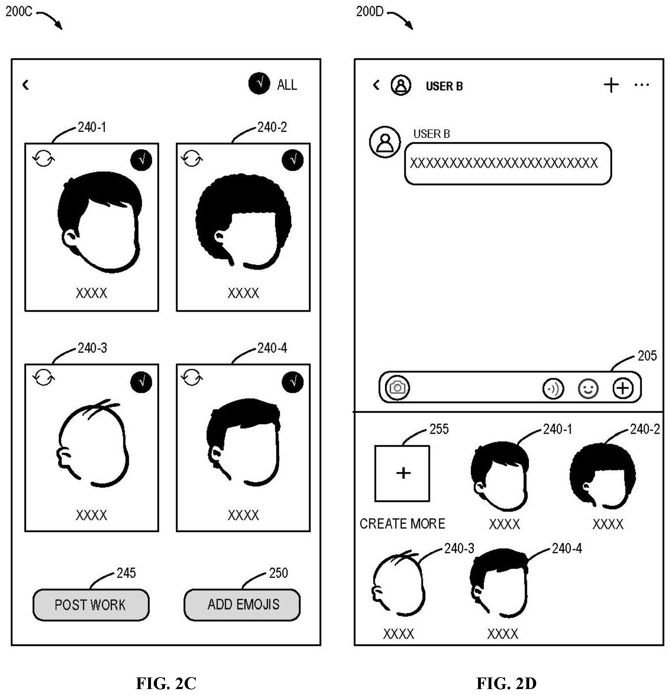

Further, after the user triggers an emoji generation request by shooting the target image or uploading the target image, the electronic device 110 may accordingly present an interface 200C shown in FIG. 2C. The interface 200C may also be referred to as an emoji preview interface.

As shown in FIG. 2C, the electronic device 110 may provide a set of emoji resources generated based on the acquired target image 220, for example, an emoji resource 240-1, an emoji resource 240-2, an emoji resource 240-3, and an emoji resource 240-4 (individually or collectively referred to as emoji resources 240). Such emoji resources 240 may include, but are not limited to, static images, dynamic images, videos, three-dimensional models, etc.

In some embodiments, the set of emoji resources 240 may include a plurality of items of emoji resources corresponding to a plurality of preset themes. Such preset themes may correspond to the content of the emoji resources, for example.

As an example, the emoji resource 240-1, the emoji resource 240-2, the emoji resource 240-3, and the emoji resource 240-4 may correspond to different holiday blessing themes.

In some embodiments, the emoji resource 240 may further include corresponding text content, for example. In addition, the electronic device 110 may further receive the user's editing operation for the text content, and update the text content in the emoji resource 240 accordingly.

In some embodiments, the text content may be used to express a theme corresponding to the emoji resource 240. Alternatively, the text content may also be used as an identifier of the emoji resource 240.

In some embodiments, the set of emoji resources 240 may be generated by a target model based on the received target image 220. It should be understood that the target model may be implemented based on any appropriate machine learning technology, and examples of the target model include but are not limited to an image generation model and the like. In addition, the target model may be deployed locally on the electronic device 110, or may be deployed on other appropriate remote devices, and may be accessed or invoked by the electronic device 110 in an appropriate manner.

In some embodiments, the plurality of emoji resources 240 may be generated by providing a plurality of different preset prompts to the target model. For example, the emoji resource 240-1 may be generated based on a first prompt corresponding to a first theme, and the first prompt may be used to guide the target model to generate media content corresponding to the first style indicated by the first prompt based on the target image, as an emoji resource. On the contrary, the emoji resource 240-2 may be generated based on a second prompt corresponding to a second theme, and the second prompt may be used to guide the target model to generate media content corresponding to the second style indicated by the second prompt based on the target image, as an emoji resource.

In some embodiments, the set of emoji resources 240 generated by the target model may have visual content corresponding to the received target image 220. For example, when the target image 220 includes a specific part (a face or a hand, etc.), the set of emoji resources 240 may have visual content (for example, different emojis of the face, or different actions of the hand, etc.) corresponding to the specific part.

In some embodiments, the electronic device 110 may further provide a corresponding update entry in association with a single emoji resource 240, for example, an update icon in the upper left corner of the emoji resource 240-1. The electronic device 110 may trigger regeneration of a further emoji resource corresponding to the theme based on a selection of the update entry, and may display the further emoji resource to replace the original emoji resource 240-1.

In some embodiments, the electronic device 110 may further provide an entry (not shown) for triggering all of the set of emoji resources 240 to be re-generated. For example, if the user is not satisfied with the set of emoji resources 240, the electronic device 110 may provide a new set of re-generated emoji resources based on the user's trigger for the entry.

As an example, the electronic device 110 may trigger to provide regeneration and provision of emoji resources based on the user's down-sliding operation for the interface 200C (for example, if the down-sliding amplitude is greater than a threshold).

As another example, the electronic device 110 may further present emoji resources corresponding to other themes based on the user's up-sliding operation for the interface 200C. Alternatively, the electronic device 110 may further provide, based on the user's up-sliding operation for the interface 200C, regeneration and provision of emoji resources that are hidden and not displayed due to the up-sliding operation.

In some embodiments, the electronic device 110 may further provide a second set of emoji resources corresponding to another style (for example, a second style) based on a preset operation of the user. Similar to the first set of emoji resources 240, the second set of emoji resources may include a plurality of items of emoji resources generated based on the target image 220 and corresponding to a plurality of preset themes.

As an example, the electronic device 110 may receive a left-sliding operation of the user for the interface 200C, for example, and display the second set of emoji resources corresponding to the second style in the interface 200C. Alternatively, the electronic device 110 may provide a style selection control similar to the interface 200B to present the second set of emoji resources based on the user's selection of the second style.

In some embodiments, as shown in FIG. 2C, the electronic device 110 may further provide a posting control 245. For example, the electronic device 110 may receive the user's selection of one or more target emoji resources from the set of emoji resources 240, and post a work of the selected one or more target emoji resources based on a selection of the posting control 245.

As an example, the posted work may include, for example, a picture work, a picture album work, a video work, etc., generated by one or more emoji resources.

As another example, if the interface 200C is also provided with one or more sets of emoji resources corresponding to other styles in association, the electronic device 110 may receive the user's selection of a plurality of target emoji resources from the plurality of sets of emoji resources, for example, and post a corresponding work based on a selection of the posting control 245.

In addition, as shown in FIG. 2C, the electronic device 110 may further provide an adding control 250. Similarly, the electronic device 110 may receive the user's selection of one or more target emoji resources from the set of emoji resources 240, for example, and add the one or more target emoji resources to a emoji resource library for the user based on a selection of the adding entry 250.

As an example, the emoji resource library may include the user's local emoji library or cloud emoji library to support the user to use emoji resources that are selected to be added in the emoji resource library to perform interaction.

As another example, if the interface 200C is also provided with one or more sets of emoji resources corresponding to other styles in association, the electronic device 110 may receive the user's selection of a plurality of target emoji resources from the plurality of sets of emoji resources, for example, and add corresponding emoji resources to the emoji resource library based on a selection of the adding control 250.

As an example, as shown in FIG. 2D, if the user adds the emoji resource 240-1 to the emoji resource 240-4 to the emoji resource library, the electronic device 110 may present added emojis in the emoji resource library based on the user's emoji input request, for example, the emoji resource 240-1 to the emoji resource 240-4.

Further, the electronic device 110 may send the emoji resource 240-1 to the current input environment, for example, a chat with "User B", based on the user's selection of the emoji resource 240-1. It should be understood that the input environment is only illustrative, and the embodiments of the present disclosure may support any other appropriate input environment suitable for inputting emojis, such as document editing, comment input, or editing of media content work, etc.

Further, the electronic device 110 may further provide a creation entry 255 for supporting the user to shoot or upload images to create other new emojis. For example, the electronic device 110 may present the interface 200B discussed with reference to FIG. 2B based on a selection of the creation entry 225. For the process of emoji generation, reference may be made to the content described above, which will not be repeated here.

Based on the process discussed above, the embodiments of the present disclosure can support the user to automatically produce emojis of corresponding styles and themes by uploading or shooting images, thereby improving the efficiency of emoji generation. In addition, by generating and providing such customized emojis, the embodiments of the present disclosure further improve the quality of the generated emojis, thereby helping to improve the efficiency of information exchange.

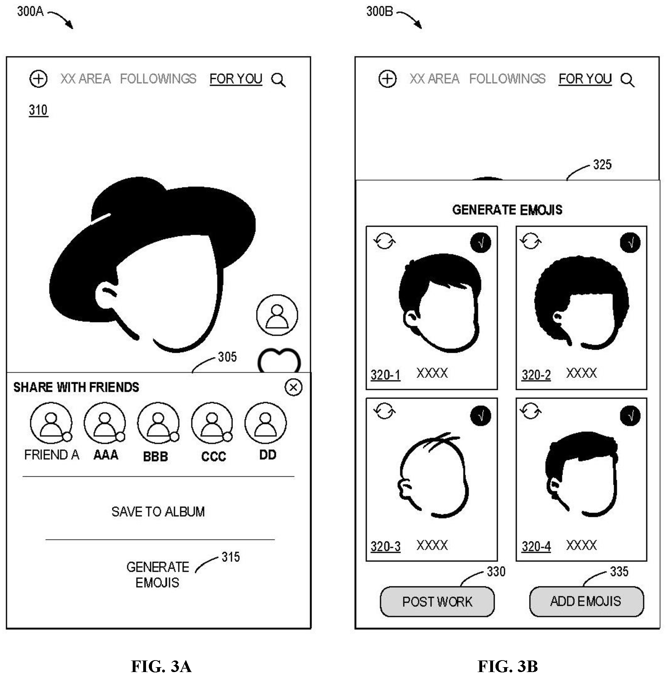

An example interaction according to the embodiments of the present disclosure is further described below with reference to FIGS. 3A and 3B. FIGS. 3A and 3B show example interfaces 300A to 300B according to some embodiments of the present disclosure. The interfaces 300A and 300B may be provided by the electronic device 110 shown in FIG. 1.

As shown in FIG. 3A, the interface 300A may be a viewing interface of a work 310, for example. The work 310 may include, for example, an image work (for example, a single picture work, a picture album work) or a video work.

Further, the electronic device 110 may present a panel 305 based on a preset operation (for example, a sharing operation) of the user. In the panel 305, the electronic device 110 may provide an entry 315 for generating an emoji based on the work 310.

In some embodiments, if a selection of the entry 315 is received, the electronic device 110 may present an interface 300B shown in FIG. 3B. As shown in FIG. 3B, the electronic device 110 may provide an emoji preview panel 325 in the interface 300B.

In some embodiments, the electronic device 110 may provide a set of emoji resources generated based on the work 310 in the emoji preview panel 325, for example, an emoji resource 320-1, an emoji resource 320-2, an emoji resource 320-3, and an emoji resource 320-4 (individually or collectively referred to as emoji resources 320). Such emoji resources 320 may include, but are not limited to, static images, dynamic images, videos, three-dimensional models, etc.

In some embodiments, the set of emoji resources 320 may include emoji resources extracted from pictures of the work 310. As an example, the electronic device 110 and/or other appropriate devices may analyze image content of the work 310, and may extract static images, dynamic images, videos, etc., therefrom as the emoji resources 320.

Taking the work 310 as a video work as an example, the electronic device 110 and/or other appropriate devices may extract, based on picture analysis on the video work, and based on a preset time window, a corresponding video clip, and crop pictures of the video clip to generate the corresponding emoji resource 320.

For example, the electronic device 110 and/or other appropriate devices may select a clip with relatively large changes in a facial emoji of a person in the work from the video work, and crop an area corresponding to a face of the person as the corresponding emoji resource 320.

In still some embodiments, the set of emoji resources 325 may be emoji resources generated by the target model based on target image content in the work 310.

As an example, the work 110 may be an image work, for example, and the electronic device 110 may determine the image work itself or specific image content (for example, image content corresponding to a specific part) in the image work as target image content, for example, and provide the target image content to the target model for the generation of emoji resources 320.

As another example, the work 110 may be a video work or a picture album work, for example, and the electronic device 110 may determine one or more specific images (for example, an image frame in a video or a single picture in a picture album) in the video work or the picture album work as the target image content, or may determine one or more specific picture parts (for example, a picture part corresponding to a specific part of an object) in the video work or the picture album work as the target image content, and provide the target image content to the target model for the generation of emoji resources 320.

In some embodiments, the electronic device 110 may further provide the user with a set of candidate image content determined based on the work, for example, and may receive a selection of target image content from the set of candidate image content for the generation of emoji resources 320.

For the generation process and corresponding interaction process of the emoji resources 320 in the emoji preview panel 325, reference may be made to the content described above with reference to FIG. 2C, which will not be repeated in the present disclosure.

In some embodiments, if the set of emoji resources 320 includes emoji resources extracted from pictures of the work 310, the electronic device 110 may, for example, further trigger generation of a new set of emoji resources based on an emoji resource (for example, the emoji resource 320-1) based on the user's selection of the emoji resource. For example, the emoji resource 320-1 may be used for the target image introduced above to generate a new set of emoji resources.

Continuing to refer to FIG. 3B, in some embodiments, the electronic device 110 may further provide a posting control 330, for example. Similar to the content described above with reference to FIG. 2C, the electronic device 110 may post a work corresponding to one or more selected emoji resources 320 based on a selection of the posting control 330. As an example, the posted work may include, for example, a picture work, a picture album work, a video work, etc., generated by one or more emoji resources.

In some embodiments, the electronic device 110 may further provide an adding control 335, for example. Similar to the content described above with reference to FIG. 2C, the electronic device 110 may add the selected one or more emoji resources to the user's emoji resource library based on a selection of the adding control 335.

Based on the process described above, the embodiments of the present disclosure can support the user to produce corresponding emojis based on the posted work, and may post new works based on the generated emojis, thereby improving the efficiency of work creation by the user.

### Example Processes

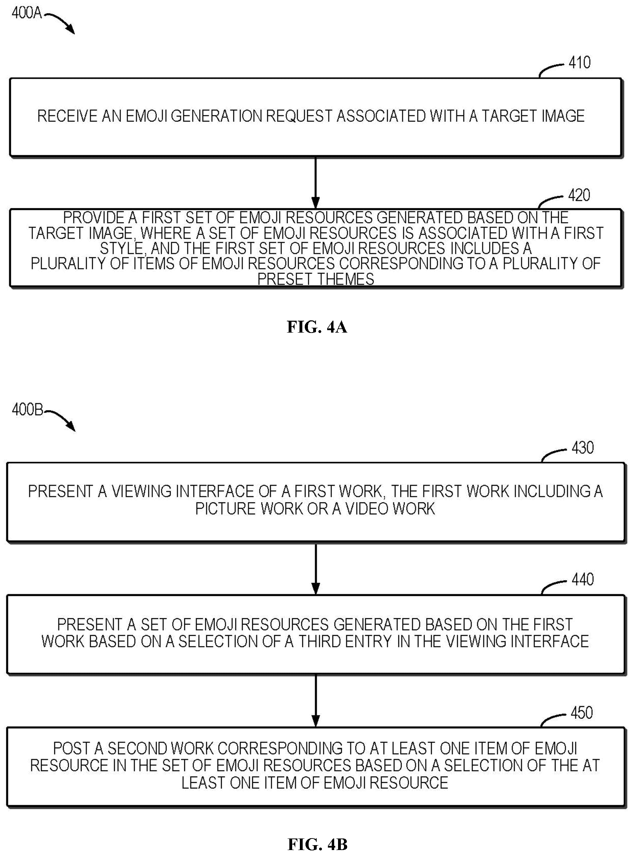

FIG. 4A is a flowchart of an example process 400A for generating an emoji according to some embodiments of the present disclosure. The process 400A may be implemented at the electronic device 110. The process 400A is described below with reference to FIG. 1.

As shown in FIG. 4A, at block 410, the electronic device 110 receives an emoji generation request associated with a target image.

At block 420, the electronic device 110 provides a first set of emoji resources generated based on the target image, where a set of emoji resources is associated with a first style, and the first set of emoji resources includes a plurality of items of emoji resources corresponding to a plurality of preset themes.

In some embodiments, receiving the emoji generation request associated with the target image includes: presenting a chat interface, the chat interface including an input control; receiving a selection of the first style in the input control, and presenting an image acquisition interface; and receiving the emoji generation request associated with the target image in response to acquiring the target image via the image acquisition interface.

In some embodiments, the target image includes an image shot via the image acquisition interface or an image uploaded via the image acquisition interface.

In some embodiments, receiving the emoji generation request associated with the target image includes: presenting a work creation interface; and receiving the emoji generation request associated with the target image in response to acquiring the target image via the work creation interface.

In some embodiments, receiving the emoji generation request associated with the target image includes: presenting a viewing interface of a first work; and receiving the emoji generation request associated with the target image based on a selection of a first entry in the viewing interface, where the target image is determined based on the first work.

In some embodiments, the first work is an image work including at least one image, and the target image is determined based on the at least one image; or the first work is a video work, and the target image is determined based on at least one video frame of the video work.

In some embodiments, the process 400A further includes: receiving a selection of the first style from a set of preset styles.

In some embodiments, the process 400A further includes: presenting a shooting interface for shooting the target image, the shooting interface including indication information, the indication information being configured to guide a user to shoot the target image corresponding to a preset part.

In some embodiments, the shooting interface further includes a style selection component for receiving a selection of the first style from a set of preset styles by the user.

In some embodiments, the first set of emoji resources includes at least a first emoji resource, and the first emoji resource includes text content.

In some embodiments, the process 400A further includes: updating the text content in the first emoji resource based on an editing operation for the text content.

In some embodiments, the process 400A further includes: providing an update entry in association with a second emoji resource of the first set of emoji resources; and updating the second emoji resource based on a selection of the update entry, where the updated second emoji resource is an emoji resource re-generated based on the target image.

In some embodiments, the first set of emoji resources is presented in an emoji preview interface, and the process 400A further includes: providing a second set of emoji resources corresponding to a second style in the emoji preview interface based on a preset operation for the emoji preview interface, the second set of emoji resources being generated based on the target image.

In some embodiments, the process 400A further includes: receiving a first selection of a first set of target emoji resources from the first set of emoji resources; and adding the first set of target emoji resources to an emoji resource library for a current user or posting a work corresponding to the first set of target emoji resources based on the first selection.

In some embodiments, adding the first set of target emoji resources to the emoji library or posting the work corresponding to the first set of target emoji resources based on the first selection includes: receiving a second selection of a second set of target emoji resources from a third set of emoji resources generated based on the target image; and adding the first set of target emojis and the second set of target emojis to the emoji library or posting the work corresponding to the first set of target emoji resources and the second set of target emoji resources.

In some embodiments, the plurality of items of emoji resources included in the first set of emoji resources are generated by providing a plurality of preset prompts to a target model, and the plurality of preset prompts correspond to the plurality of preset themes.

FIG. 4B is a flowchart of an example process 400B for posting a work according to some embodiments of the present disclosure. The process 400B may be implemented at the electronic device 110. The process 400B is described below with reference to FIG. 1.

As shown in FIG. 4B, at block 430, the electronic device 110 presents a viewing interface of a first work, the first work including a picture work or a video work.

At block 440, the electronic device 110 presents a set of emoji resources generated based on the first work based on a selection of a third entry in the viewing interface.

At block 450, the electronic device 110 posts a second work corresponding to at least one item of emoji resource in the set of emoji resources based on a selection of the at least one item of emoji resource.

In some embodiments, the set of emoji resources includes at least one of: an emoji resource extracted from an image of the first work; or an emoji resource generated by a target model based on target image content in the first work.

In some embodiments, the process 400B further includes: presenting a set of candidate image content in the first work; and receiving a selection of the target image content from the set of candidate image content.

### Example Apparatuses and Devices

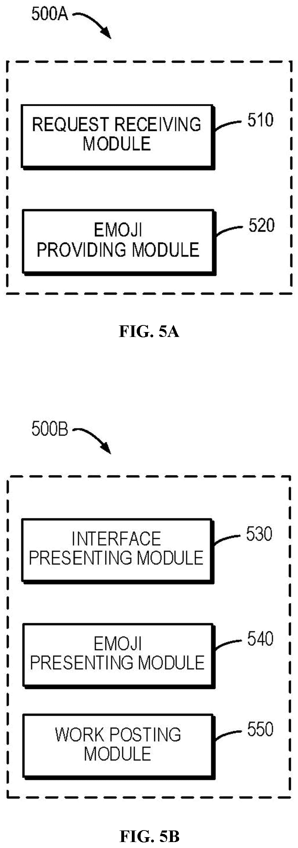

The embodiments of the present disclosure further provide corresponding apparatuses for implementing the above methods or processes. FIG. 5A is a schematic structural block diagram of an example apparatus 500A for generating an emoji according to some embodiments of the present disclosure. The apparatus 500A may be implemented as or included in the electronic device 110. Each module/component in the apparatus 500A may be implemented by hardware, software, firmware, or any combination thereof.

As shown in FIG. 5A, the apparatus 500A includes a request receiving module 510 configured to receive an emoji generation request associated with a target image; and an emoji providing module 520 configured to provide a first set of emoji resources generated based on the target image, where a set of emoji resources is associated with a first style, and the first set of emoji resources includes a plurality of items of emoji resources corresponding to a plurality of preset themes.

In some embodiments, the request receiving module 510 is further configured to: present a chat interface, the chat interface including an input control; receive a selection of the first style in the input control, and present an image acquisition interface; and receive the emoji generation request associated with the target image in response to acquiring the target image via the image acquisition interface.

In some embodiments, the target image includes an image shot via the image acquisition interface or an image uploaded via the image acquisition interface.

In some embodiments, the request receiving module 510 is further configured to: present a work creation interface; and receive the emoji generation request associated with the target image in response to acquiring the target image via the work creation interface.

In some embodiments, the request receiving module 510 is further configured to: present a viewing interface of a first work; and receive the emoji generation request associated with the target image based on a selection of a first entry in the viewing interface, where the target image is determined based on the first work.

In some embodiments, the first work is an image work including at least one image, and the target image is determined based on the at least one image; or the first work is a video work, and the target image is determined based on at least one video frame of the video work.

In some embodiments, the apparatus 500A further includes a style selection module configured to receive a selection of the first style from a set of preset styles.

In some embodiments, the apparatus 500A further includes an image shooting module configured to: present a shooting interface for shooting the target image, the shooting interface including indication information, the indication information being configured to guide a user to shoot the target image corresponding to a preset part.

In some embodiments, the shooting interface further includes a style selection component for receiving a selection of the first style from a set of preset styles by the user.

In some embodiments, the first set of emoji resources includes at least a first emoji resource, and the first emoji resource includes text content.

In some embodiments, the apparatus 500A further includes a text editing module configured to update the text content in the first emoji resource based on an editing operation for the text content.

In some embodiments, the apparatus 500A further includes a regenerating module configured to: provide an update entry in association with a second emoji resource of the first set of emoji resources; and update the second emoji resource based on a selection of the update entry, where the updated second emoji resource is an emoji resource re-generated based on the target image.

In some embodiments, the first set of emoji resources is presented in an emoji preview interface, and the apparatus 500A further includes an emoji preview module configured to: provide a second set of emoji resources corresponding to a second style in the emoji preview interface based on a preset operation for the emoji preview interface, the second set of emoji resources being generated based on the target image.

In some embodiments, the apparatus 500A further includes a first posting module configured to: receive a first selection of a first set of target emoji resources from the first set of emoji resources; and add the first set of target emoji resources to an emoji resource library for a current user or post a work corresponding to the first set of target emoji resources based on the first selection.

In some embodiments, the first posting module is further configured to: receive a second selection of a second set of target emoji resources from a third set of emoji resources generated based on the target image; and add the first set of target emojis and the second set of target emojis to the emoji resource library or post the work corresponding to the first set of target emoji resources and the second set of target emoji resources.

In some embodiments, the plurality of items of emoji resources included in the first set of emoji resources are generated by providing a plurality of preset prompts to a target model, and the plurality of preset prompts correspond to the plurality of preset themes.

The embodiments of the present disclosure further provide corresponding apparatuses for implementing the above methods or processes. FIG. 5B is a schematic structural block diagram of an apparatus 500B for posting a work according to some embodiments of the present disclosure. The apparatus 500B may be implemented as or included in the electronic device 110. Each module/component in the apparatus 500B may be implemented by hardware, software, firmware, or any combination thereof.

As shown in FIG. 5B, the apparatus 500B includes an interface presenting module 530 configured to present a viewing interface of a first work, the first work including a picture work or a video work; an emoji presenting module 540 configured to present a set of emoji resources generated based on the first work based on a selection of a third entry in the viewing interface; and a work posting module configured to post a second work corresponding to at least one item of emoji resource in the set of emoji resources based on a selection of the at least one item of emoji resource.

In some embodiments, the set of emoji resources includes at least one of: an emoji resource extracted from an image of the first work; or an emoji resource generated by a target model based on target image content in the first work.

In some embodiments, the apparatus 500B further includes a content selection module configured to: present a set of candidate image content in the first work; and receive a selection of target image content from the set of candidate image content.

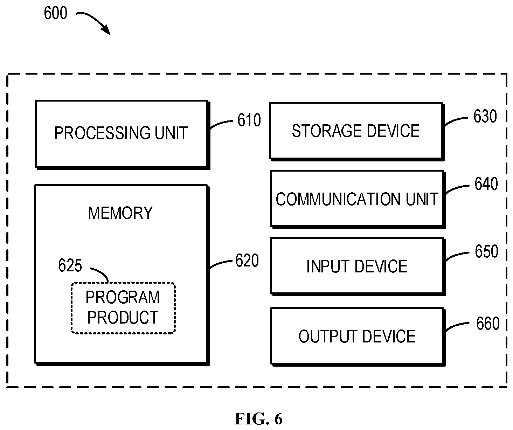

FIG. 6 is a block diagram of an electronic device 600 in which one or more embodiments of the present disclosure may be implemented. It should be understood that the electronic device 600 shown in FIG. 6 is only illustrative, and should not constitute any limitation on the functions and scope of the embodiments described herein. The electronic device 600 shown in FIG. 6 may be used to implement the electronic device 110 shown in FIG. 1.

As shown in FIG. 6, the electronic device 600 is in the form of a general electronic device. The components of the electronic device 600 may include but are not limited to one or more processors or processing units 610, a memory 620, a storage device 630, one or more communication units 640, one or more input devices 650, and one or more output devices 660. The processing unit 610 may be an actual or virtual processor, and may perform various processing based on a program stored in the memory 620. In a multi-processor system, a plurality of processing units perform computer executable instructions in parallel to improve the parallel processing capability of the electronic device 600.

The electronic device 600 typically includes a plurality of computer storage medium. Such medium may be any available medium accessible by the electronic device 600, including but not limited to volatile and non-volatile medium, and removable and non-removable medium. The memory 620 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include other removable/non-removable, volatile/non-volatile memory medium. Although not shown in FIG. 6, a disk drive for reading from or writing into removable, non-volatile disks (such as a "floppy disk"), and an optical disk drive for reading from or writing into removable, non-volatile optical disks may be provided. In these cases, each drive may be connected to a bus (not shown) by one or more data medium interfaces. The memory 620 may include a computer program product 625 having one or more program modules configured to perform various methods or acts of the various embodiments of the present disclosure.

The communication unit 640 implements communication with other electronic devices through a communication medium. Additionally, the functions of the components of the electronic device 600 may be implemented by a single computing cluster or a plurality of computing machines, which may communicate through a communication connection. Therefore, the electronic device 600 may use a logical connection with one or more other servers, a network personal computer (PC), or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) through the communication unit 640 according to needs, the external devices such as a storage device, a display device, etc., communicate with one or more devices enabling the user to interact with the electronic device 600, or communicate with any devices (for example, a network card, a modem, etc.) enabling the electronic device 600 to communicate with one or more other electronic devices. Such communication may be performed via an input/output (I/O) interface (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product tangibly stored on a non-transitory computer-readable medium and including computer-executable instructions, where the computer-executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowchart(s) and/or block diagram(s), and combinations of blocks in the flowchart(s) and/or block diagram(s), may be implemented by computer-readable program instructions.

These computer-readable program instructions may be provided to a processing unit of a generalpurpose computer, a special-purpose computer, or other programmable data processing apparatus to produce a machine, such that these instructions, when executed by the processing unit of the computer or other programmable data processing apparatus, produce an apparatus for implementing the functions/actions specified in one or more blocks of the flowchart(s) and/or block diagram(s). These computer-readable program instructions may also be stored in a computer-readable storage medium, these instructions cause the computer, the programmable data processing apparatus, and/or other devices to work in a specific manner, and thus, the computer-readable medium storing the instructions includes a manufactured product, which includes instructions for implementing various aspects of the functions/actions specified in one or more blocks of the flowchart(s) and/or block diagram(s).

The computer-readable program instructions may be loaded onto a computer, another programmable data processing apparatus, or other devices, causing a series of operation steps to be performed on the computer, the another programmable data processing apparatus, or the other devices to produce a computer-implemented process, such that the instructions executed on the computer, the another programmable data processing apparatus, or the other devices implement the functions/actions specified in one or more blocks of the flowchart(s) and/or block diagram(s).

The flowcharts and block diagrams in the drawings show the possibly implemented architectures, functions, and operations of the systems, methods, and computer program products according to a plurality of implementations of the present disclosure. In this regard, each block in the flowchart or block diagram may represent a module, a program segment, or a part of instructions, and the module, the program segment, or the part of instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram(s) and/or flowchart(s), and combinations of the blocks in the block diagram(s) and/or flowchart(s), may be implemented by a special-purpose hardware-based system that executes specified functions or acts, or may be implemented by a combination of special-purpose hardware and computer instructions.

The implementations of the present disclosure have been described above, and the above description is illustrative, non-exhaustive, and not limited to the disclosed implementations. Without departing from the scope and spirit of the illustrated implementations, many modifications and changes will be apparent to those of ordinary skill in the art. The terminology used herein is chosen to best explain the principles of the implementations, the practical applications or improvements to the technology in the market, or to enable other those of ordinary skill in the art to understand the implementations disclosed herein.

## Claims

1. A method for generating an emoji, comprising:
receiving an emoji generation request associated with a target image; and
providing a first set of emoji resources generated based on the target image, wherein a set of emoji resources is associated with a first style, and the first set of emoji resources comprises a plurality of items of emoji resources corresponding to a plurality of preset themes.

2. The method of claim 1, wherein receiving the emoji generation request associated with the target image comprises:
presenting a chat interface, the chat interface comprising an input control;
receiving a selection of the first style in the input control, and presenting an image acquisition interface; and
receiving the emoji generation request associated with the target image in response to acquiring the target image via the image acquisition interface.

3. The method of claim 2, wherein the target image comprises:
an image shot via the image acquisition interface, or
an image uploaded via the image acquisition interface.

4. The method of claim 1, wherein receiving the emoji generation request associated with the target image comprises:
presenting a work creation interface; and
receiving the emoji generation request associated with the target image in response to acquiring the target image via the work creation interface.

5. The method of claim 1, wherein receiving the emoji generation request associated with the target image comprises:
presenting a viewing interface of a first work; and
receiving the emoji generation request associated with the target image based on a selection of a first entry in the viewing interface, wherein the target image is determined based on the first work.

6. The method of claim 5, wherein:
the first work is an image work comprising at least one image, and the target image is determined based on the at least one image; or
the first work is a video work, and the target image is determined based on at least one video frame of the video work.

7. The method of claim 1, further comprising:
receiving a selection of the first style from a set of preset styles.

8. The method of claim 1, further comprising:
presenting a shooting interface for shooting the target image, the shooting interface comprising indication information for guiding a user to shoot the target image corresponding to a preset part.

9. The method of claim 8, wherein the shooting interface further comprises a style selection component for receiving a selection of the first style from a set of preset styles by the user.

10. The method of claim 1, wherein the first set of emoji resources comprises at least a first emoji resource, the first emoji resource comprising text content.

11. The method of claim 10, further comprising:
updating the text content in the first emoji resource based on an editing operation for the text content.

12. The method of claim 1, further comprising:
providing an update entry in association with a second emoji resource of the first set of emoji resources; and
updating the second emoji resource based on a selection of the update entry, wherein the updated second emoji resource is an emoji resource re-generated based on the target image.

13. The method of claim 1, wherein the first set of emoji resources is presented in an emoji preview interface, and the method further comprises:
providing a second set of emoji resources corresponding to a second style in the emoji preview interface based on a preset operation for the emoji preview interface, the second set of emoji resources being generated based on the target image.

14. The method of claim 1, further comprising:
receiving a first selection of a first set of target emoji resources from the first set of emoji resources; and
adding the first set of target emoji resources to an emoji resource library for a current user or posting a work corresponding to the first set of target emoji resources based on the first selection.

15. The method of claim 14, wherein adding the first set of target emoji resources to the emoji resource library or posting the work corresponding to the first set of target emoji resources based on the first selection comprises:
receiving a second selection of a second set of target emoji resources from a third set of emoji resources generated based on the target image; and
adding the first set of target emojis and the second set of target emojis to the emoji resource library or posting the work corresponding to the first set of target emoji resources and the second set of target emoji resources.

16. The method of claim 1, wherein the plurality of items of emoji resources comprised in the first set of emoji resources are generated by providing a plurality of preset prompts to a target model, the plurality of preset prompts corresponding to the plurality of preset themes.

17. A method for posting a work, comprising:
presenting a viewing interface of a first work, the first work comprising a picture work or a video work;
presenting a set of emoji resources generated based on the first work based on a selection of a third entry in the viewing interface; and
posting a second work corresponding to at least one item of emoji resource in the set of emoji resources based on a selection of the at least one item of emoji resource.

18. The method of claim 17, wherein the set of emoji resources comprises at least one of:
an emoji resource extracted from an image of the first work; or
an emoji resource generated by a target model based on target image content in the first work.

19. The method of claim 18, further comprising:
presenting a set of candidate image content in the first work; and
receiving a selection of the target image content from the set of candidate image content.

20. An apparatus for generating an emoji, comprising:
a request receiving module configured to receive an emoji generation request associated with a target image; and
an emoji providing module configured to provide a first set of emoji resources generated based on the target image, wherein a set of emoji resources is associated with a first style, and the first set of emoji resources comprises a plurality of items of emoji resources corresponding to a plurality of preset themes.

21. An apparatus for posting a work, comprising:
an interface presenting module configured to present a viewing interface of a first work, the first work comprising a picture work or a video work;
an emoji presenting module configured to present a set of emoji resources generated based on the first work based on a selection of a third entry in the viewing interface; and
a work posting module configured to post a second work corresponding to at least one item of emoji resource in the set of emoji resources based on a selection of the at least one item of emoji resource.

22. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 16 or 17 to 19.

23. A computer-readable storage medium having a computer program stored thereon, the computer program being executable by a processor to implement the method of any of claims 1 to 16 or 17 to 19.
